# EUROPEAN PATENT SPECIFICATION

(11) **EP 0 466 657 B1**
(45) Date of publication and mention of the grant of the patent: **06.08.1997**
(21) Application number: 91810563.6
(22) Date of filing: 11.07.1991
(51) Int. Cl.: G01M 3/32, G01F 17/00

(54) **In-line volume testing a plastic bottle**
Volumentest einer Plastikflasche in einer Produktionslinie
Tester le volume d'une bouteille en plastique dans une chaîne de production

(30) Priority: 12.07.1990 US 551792; 30.04.1991 US 693586
(43) Date of publication of application: 15.01.1992
(60) Divisional application: 96117600.5
(73) Proprietor: Lehmann, Martin, CH-5610 Wohlen 1 (CH)
(72) Inventor: Lehmann, Martin, CH-5610 Wohlen 1 (CH)
(74) Representative: Troesch Scheidegger Werner AG

(56) References cited:
- WO-A-80/02196
- CH-A- 534 350
- FR-A- 1 474 553
- FR-A- 2 518 263
- FR-A- 2 528 730
- FR-A- 2 646 238
- US-A- 3 060 735
- US-A- 4 019 370
- US-A- 4 763 518
- US-A- 4 942 758
- Moderne Messmethoden der Physik, Part 1 by F.X.Eder; Berlin (DD) 1952; page 78

## Description

The invention is related on volume testing of a plastic bottle in fast production or in other words in-line.

A testing method and apparatus for flexible hollow bodies is known from the EP-A1-0 313 678.

Thereby, such bodies are provided within a test chamber and there is applied a positive or negative pressure to the test chamber as an initial pressure value.

Although very accurate tests may be performed by monitoring the behaviour of the pressure in the test chamber, this known technique has several drawbacks:
- using a test cavity results in a relatively slow test procedure not suited for fast in-line tests,
- using a difference measurement of pressures may further slow down the procedure by flow times of gas,
- applying positive or negative pressure to apply a pressure difference across the wall of such bodies is often not equally advantageous.

General volume or leak testing of plastic bottles in a production line is further known from the EP-0 295 371.

From the US-A-4 019 370 there is known a method and apparatus to detect whether plastic bottles are not leaking. Thereby a constant volume reservoir is charged to a given pressure. Then the container is placed in communication with the reservoir volume to establish a new constant volume system. If no leak is present in the container, the equilibrium pressure is at a predetermined value. Thereby monitoring equilibrium pressure for leak testing will only result in detecting large leaks, as otherwise rated equilibrium pressure will be reached first and pressure will then start to diminish, due to small leak.

One object of the present invention is to create a volume testing method for such bottles as well as a corresponding apparatus for volume testing such bottles in a simple fast and greatly reliable manner.

This is accomplished by the use of a method as e.g. known from US-A-4 019 370 according to claim 1 and by the use of the apparatus as e.g, known from US-A-4 019 370 according to claim 5 for volume testing.

A chamber is pressurized to a given pressure and then joined to the bottle. The pressure in the bottle is then derived from the pressure level set in the reference chamber and from the volume ratio of the reference chamber to interior volume of the bottle. Thereby, a simple and fast test method for volume is created.

Furthermore, by inventively carrying out the evaluation of pressure at a particular point in time, the process of the evaluation becomes extremely simple. At a given point in time a check is carried out to ascertain whether the ACTUAL bottle pressure corresponds to the DESIRED bottle pressure which has been selected in advance for bottles of rated volume. If the ACTUAL test pressure is compared at two or more points in time, or even continuously in time, with DESIRED pressure values for two or more points in time or with a DESIRED pressure-time curve, then especially in the case of very small volume deviations the resolving power of the evaluation process is increased, for example, by integrating the comparative result or the DESIRED-ACTUAL difference.

Furthermore, pre-selected DESIRED pressure values or DESIRED pressure curves are preferentially stored when carrying out the test mentioned above, they are compared with the recorded ACTUAL values in order to determine whether a bottle should be rejected because of excessive volume.

Pressure generating elements are preferably linked through at least one first shut-off member with a reference chamber, with the reference chamber being, in turn, connected through at least one second shut-off member with the interior of the bottle.

In accordance with the present invention, the pressure-recording elements may comprise at least one pressure difference sensor having one input directly linked with the bottle and a second input connected in parallel to the bottle by way of a further reference chamber which is closable by way of a shut-off device or by way of a storage device.

In accordance with still further features of the present invention, a control unit is provided by which the shut-off device or store control is closed or enabled, respectively, once a given pressure is reached in the bottle in order to store a reference pressure value for pressure value difference forming means, to which also the actual pressure value from the bottle is led.

Thus, in accordance with features of the present invention, storage means are provided for data corresponding to at least one DESIRED pressure or at least one DESIRED PRESSURE CURVE, with the pressure recording element and the storage means being connected to a comparator arrangement as difference forming means in order to compare the behaviour of the pressure in the bottle.

In lieu of providing a pressure difference sensor arrangement, in accordance with another technical approach of the present invention, it is possible for the pressure difference signal to be electronically formed whereby pressure values prevailing in the bottle are tapped off at different points in time using the first pressure value as reference pressure value in comparing the second pressure value with the first pressure value and electronically generating a pressure difference value signal.

It is advantageous to store a first pressure value from the reference chamber at a first time and to compare it, at a second point in time, with the pressure resulting from pressure equalization in reference chamber and interior of the bottle.

The pressure tapped off at the first of the point in time or signal generated in accordance with the tapped off pressure at the first point in time is stored.

The generated difference pressure signal may advantageously be compared with a predetermined value and a conclusion may be reached indicating a deviation from a rated volume.

Control means in accordance with the present invention may include a means for outputting a start signal for the time control means once a preselected value is reached within reference chamber so as to initiate a control of two subsequent points in time.

Advantageously, the reference signal source may be adapted to output a reference signal varying in time.

The above and other objects, features, and advantages of the present invention will become more apparent from the following description when taken in connection with the accompanying drawings which show, for the purpose of illustration only, several examples in accordance with the present invention.

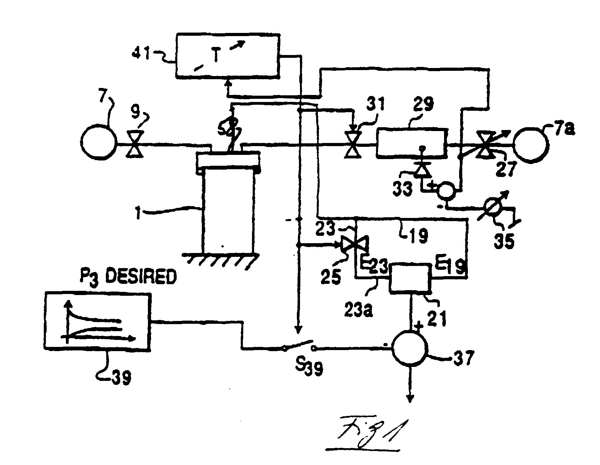

Figs. 1 are schematic views of embodiments of the and 2 present invention.

As shown in fig. 1, a test gas source such as, for example, pump 7a is connected by way of a shut-off valve 27 with a reference volume in a reference chamber 29. The reference chamber 29 is connected by way of a further shut-off valve 31 with the bottle 1 sealed by the sealing adaptor 58. With the valve 27 being in an initially open position and the valve 31 shut, the source 7a fills the reference chamber with a test gas and the pressure sensor 33 is used to measure the pressure in the reference chamber 29. Once the pressure measured by the pressure sensor 33 attains the reference pressure adjusted at the reference signal source 35, the valve 27 is closed and the valve 31 is opened thus forming a communication system between the bottle 1 and the reference chamber 29, with the test gas pressure being equalized in accordance with the volumes in the reference chamber 29 and the bottle 1. Following an equalization phase, the course of the pressure difference is measured using the pressure difference sensor 21 with any differences between a DESIRED pressure difference and an ACTUAL pressure difference being recorded.

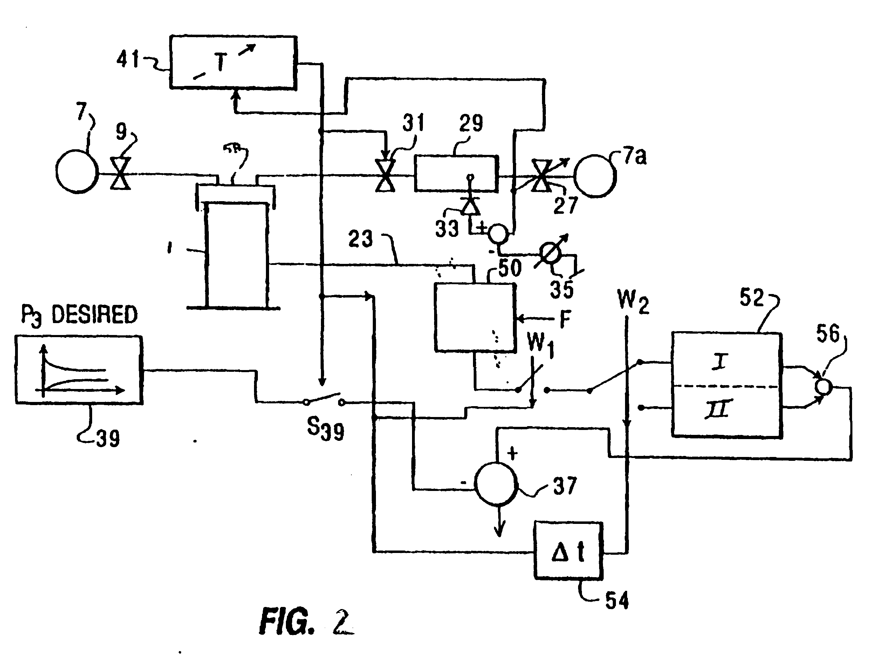

In the embodiment of fig. 2, prevailing pressure in the hollow body 1 may be tapped by the connecting line 23 arranged between the bottle 1 and a pressure electrical signal transducer 50 which may, for example, be an absolute pressure/electric signal transducer such as a piezo-transducer working against a reference force F. The electrical output of the transducer 50 representing the pressure prevailing in the bottle 1 is led by way of the switch W₁ and the switch W₂ to a first storage area I of a conventional electronic storage unit 52 once the timer unit 41 activates the switch W₁ at a first point in time.

The timer unit 41, after a predetermined time interval, subsequently activates the switch W₁ at a point in time later than the first point in time so that the output signal of the transducer 50 is led to the secondary II of the storage unit 52 upon an activation of the switch W₂ by an output signal of a conventional time lag unit 54 formed either as a separate component from or an integral portion of the timer unit 41.

The data is processed and the testing proceeds in the same manner as described hereinabove in connection with fig. 1.

While I have shown and described embodiments in accordance with the present invention, it is understood that the same is not limited thereto but is susceptible to numerous changes and modifications as known to one of ordinary skill in the art, and I therefore do not wish to be limited to the details shown and described herein, but intend to cover all such modifications as are encompassed by the scope of the appended claims.

## Claims

1. The use of a method for in-line testing a plastic bottle, wherein a predetermined volume (29) is loaded with a predetermined pressure of a gas, said predetermined volume (29) loaded with said predetermined pressure is sealingly connected to the interior of said plastic bottle (1) to form a composite volume, a pressure resulting in said composite volume is measured (50) for measuring the volume of said bottle (1), for in-line testing said plastic bottle whether its volume accords with a rated volume or not.

2. The use of claim 1, wherein the pressure in said bottle (1) is at ambient pressure before connecting to said predetermined volume.

3. The use of claim 1, wherein the resulting pressure is evaluated at a given point in time, or at two or more points in time, or by evaluating its behaviour continuously over a period of time.

4. The use of one of the claims 1 to 3, wherein the resulting pressure or a difference pressure between the resulting pressure and a reference pressure is compared at one or more points in time with given, preferentially stored (52) pressure or pressure difference values, and from the results of the comparison a conclusion is drawn about whether to reject the bottle.

5. The use of an apparatus for in-line testing a plastic bottle which comprises:
- a chamber (29) of predetermined volume,
- means (7a) for loading said chamber with a predetermined pressure,
- connecting means (31, 58) controllably and sealingly connecting said chamber (29) with the interior of said plastic bottle (1),
- pressure measuring means (50) connected to one of said interior and of said chamber to measure a pressure within said chamber and interior of said plastic bottle connected thereto
- for in-line volume testing said plastic bottle.

6. The use according to claim 5, wherein the pressure value measuring means comprise at least one differential pressure value unit (21), its one input (19) being directly linked with said interior and its second (23) input being connected with said interior by means of a storage means (23a).

7. The use according to claim 6, wherein a control unit (41) is provided by means of which the store means (23a) is loaded once a given pressure is reached in said chamber (29) in order to store a reference pressure at the differential pressure sensor.

## Patentansprüche

1. Verwendung eines Verfahrens zum Testen einer Plastikflasche in einer Produktionslinie, wobei ein vorbestimmtes Volumen (29) mit einem vorbestimmten Gasdruck geladen wird, das vorbestimmte, mit dem vorbestimmten Druck geladene Volumen (29) abgedichtet mit dem Inneren der Plastikflasche (1) verbunden ist, um ein Verbundvolumen zu bilden und ein im Verbundvolumen sich ergebender Druck zum Messen des Volumens der Flasche (1) gemessen wird (50), um bei der Plastikflasche in der Produktionslinie zu testen, ob ihr Volumen dem rechnerischen Volumen entspricht oder nicht.

2. Verwendung gemäß Anspruch 1, wobei der Druck in der Flasche (1) der Umgebungsdruck vor dem Verbinden mit dem vorbestimmten Volumen ist.

3. Verwendung gemäß Anspruch 1, wobei der sich ergebende Druck zu einem vorbestimmten Zeitpunkt oder bei zwei oder mehr Zeitpunkten ausgewertet wird, oder durch Auswerten seines Verhaltens fortlaufend über eine Zeitspanne bestimmt wird.

4. Verfahren gemäß einem der Ansprüche 1 bis 3, wobei der sich ergebende Druck oder eine Druckdifferenz zwischen dem sich ergebenden Druck und einem Referenzdruck zu einem oder mehreren Zeitpunkten mit gegebenen, vorzugsweise gespeicherten (52) Druck- oder Druckdifferenzwerten verglichen wird und auf der Grundlage der Vergleichsergebnisse entschieden wird, ob die Flasche zurückgewiesen wird.

5. Verwendung einer Vorrichtung zum Testen einer Plastikflasche in der Produktionslinie mit
einer Kammer (29) mit vorbestimmtem Volumen,
einer Einrichtung (7a) zum Beladen der Kammer mit einem vorbestimmten Druck,
einer Verbindungseinrichtung (31, 58) zum kontrollierten und abgedichteten Verbinden der Kammer (29) mit dem Inneren der Plastikflasche (1),
einer Druckmeßeinrichtung (50), die mit dem Inneren der der Kammer verbunden ist, um einen Druck in der Kammer und dem Inneren der damit verbundenen Plastikflasche zu messen, und
einem Volumentestmittel der Plastikflasche in der Produktionslinie.

6. Verwendung gemäß Anspruch 5, wobei die Druckwertmeßeinrichtung wenigstens eine Differentialdruckwert-Einheit (21) aufweist, deren erster Eingang (19) direkt mit dem Inneren verbunden ist und deren zweiter Eingang (23) mit dem Inneren mittels einer Speichereinrichtung (23a) verbunden ist.

7. Verwendung gemäß Anspruch 6, wobei eine Steuereinheit (41) vorgesehen ist, mittels der die Speichereinrichtung (23a) beladen wird, sobald ein gegebener Druck in der Kammer (29) erreicht ist, um einen Referenzdruck in dem Differentialdrucksensor zu speichern.

## Revendications

1. Mise en oeuvre d'une méthode pour tester sur chaîne une bouteille en matière plastique, dans laquelle un volume prédéterminé (29) est mis sous une pression prédéterminée d'un gaz, ledit volume prédéterminé (29) mis sous ladite pression prédéterminée étant relié hermétiquement à l'intérieur de ladite bouteille en matière plastique (1) pour former un volume composite, et une pression résultante dans ledit volume composite est mesurée (50) en vue de mesurer le volume de ladite bouteille (1), afin de tester ladite bouteille en matière plastique sur chaîne pour déterminer si son volume est conforme ou non à un volume nominal.

2. Mise en oeuvre selon la revendication 1, dans laquelle la pression régnant dans ladite bouteille (1) est la pression ambiante avant que la bouteille ne soit reliée audit volume prédéterminé.

3. Mise en oeuvre selon la revendication 1, dans laquelle la pression résultante est évaluée à un moment donné dans le temps, ou à deux moments ou plus dans le temps, ou par une évaluation de son comportement de manière continue sur une période de temps.

4. Mise en oeuvre selon l'une quelconque des revendications 1 à 3, dans laquelle la pression résultante ou une différence de pression entre la pression résultante et une pression de référence est comparée, à un ou plusieurs moments dans le temps, avec des valeurs de pression ou de différence de pression (52) données, de préférence stockées, une conclusion tirée des résultats de la comparaison permettant de déterminer si la bouteille doit être mise au rebut.

5. Utilisation d'un appareil pour tester sur chaîne une bouteille en matière plastique, comprenant :
- une chambre (29) ayant un volume prédéterminé,
- un moyen (7a) pour mettre ladite chambre sous une pression prédéterminée,
- des moyens de liaison (31, 58) qui relient de manière contrôlable et étanche ladite chambre (29) à l'intérieur de ladite bouteille en matière plastique (1),
- un moyen de mesure de pression (50) relié à l'intérieur de la bouteille ou à ladite partie intérieure et de ladite chambre pour mesurer une pression au sein de ladite chambre et à l'intérieur de la bouteille en matière plastique relié à celle-ci,
- afin de tester sur chaîne le volume de ladite bouteille en matière plastique.

6. Utilisation selon la revendication 5, dans laquelle le moyen de mesure de valeur de pression comprend au moins une unité de valeur de pression différentielle (21) ayant sa première entrée (19) reliée directement à l'intérieur de la bouteille et sa seconde entrée (23) reliée à l'intérieur de la bouteille par l'intermédiaire d'un moyen de stockage (23a).

7. Utilisation selon la revendication 6, dans laquelle il est prévu une unité de commande (41) grâce à laquelle le moyen de stockage (23a) est chargé une fois qu'une pression donnée est atteinte dans ladite chambre (29) afin de stocker une pression de référence au niveau du capteur de pression différentielle.
